# EUROPEAN PATENT APPLICATION

(11) **EP 4 728 863 A1**
(43) Date of publication of application: **22.04.2026**
(21) Application number: 25209543.5
(22) Date of filing: 17.10.2025
(51) Int. Cl.: A01M 23/24, A01M 23/30

(54) **SMALL ANIMAL TRAP AND SMALL ANIMAL TRAP SYSTEM**

(30) Priority: 17.10.2024 DE 102024130255
(71) Applicant: Pentland Firth Software GmbH, 81379 München (DE)
(72) Inventor: Heinrich, Frank, 81379 Munich (DE)
(74) Representative: Ter Meer Steinmeister & Partner

(57) **Abstract**

A small animal trap (100) comprising a first trap (111) and a second trap (112); a trap housing (120), wherein the first and second traps (111, 112) are arranged on the trap housing (120), in particular on opposing end portions (120a) of the trap housing (120); at least one identification device (130) for providing a small animal identification signal based on an identification parameter; an energy source compartment (140) being arranged on the trap housing (120), in particular in a middle portion (120b) of the housing (120), between the first and second traps (111, 112); a control unit (150) configured to process the small animal identification signal and to determine whether the first and/or second trap (111, 112) have caught a small animal, and to pro-vide a trap status signal based on the determination; a base plate (122) attached to a lower side of the trap housing (120); wherein the control unit (140) and/or the at least one identification device (130) are provided in a space between the base plate (122) and the lower side of the housing (120); and a cover (121) coupled to an upper side of the trap housing (120).

## Description

### TECHNICAL FIELD

The disclosure relates to a small animal trap and a small animal trap system for monitoring a plurality of small animal traps. Furthermore, it relates to a method for operating a small animal trap.

### TECHNICAL BACKGROUND

Small animal traps are basically known and used, for example, to keep warehouses, shops, basements, factories, restaurants, stores, logistic centers etc. free of vermin or unwanted small animals. Such protection against vermin or unwanted small animals is or may be mandatory by law for hygienic reasons and/or for reasons of containing and preventing the spread of pathogens.

There are conventional small animal traps and conventional smart small animal traps. The smart traps determine whether an animal has been caught and/or whether the trigger has been released and communicate the status to a remote place.

Conventional smart small animal traps lead to sufficient protection against vermin or unwanted small animals, but these conventional smart small animal traps are susceptible for false triggering and false identification of caught small animals.

Therefore, conventional small animal traps and conventional smart small animal traps have to be controlled/checked in a high frequency leading to a high amount of used manpower and working time just for keeping up the protection against the vermin or unwanted small animals. Furthermore, there are regulations determining when the small animal should be removed for hygienic reasons (decaying dead animals).

Small animal traps and smart small animal traps are positioned/placed in harsh environments, i.e. environments with many people. Therefore, these traps are highly influenced by external influences such as collusions/hits/shocks/shaking and/or temperature variations or watering induced by cleaning leading to unwanted false triggering of the traps.

US 2021 / 0 022 333 A1 describes a small animal trap.

Hence, the aim is to provide a smart small animal trap which communicates reliably whether a small animal has be caught and/or which significantly reduces the number of false triggers and/or false identification of caught small animals in order to reduce the used manpower and working time for keeping up the protection against the vermin or unwanted small animals and which is able to have a longer lifetime.

This object is solved by the features of the independent claims. Preferred embodiments are given in the dependent claims.

### SUMMARY OF THE INVENTION

In one aspect of the invention a small animal trap is presented. The small animal trap comprises a first trap and a second trap installed in a trap housing.

Alternatively, the small animal trap comprises at least one trap installed in/on a trap housing.

The first and second traps are arranged on the trap housing, in particular on opposing end portions of the trap housing.

Further the small animal trap includes at least one identification device for providing a small animal identification signal based on an identification parameter.

A control unit is provided and connected to the at least one identification device. In particular the control unit is provided in a middle portion of the housing, between the first and second traps.

The control unit is configured to process the small animal identification signal and to determine whether the first and/or second trap have caught a small animal, and to provide a trap status signal based on the determination.

In another aspect of the invention a small animal trap is presented. The small animal trap comprises a first trap and a second trap; a trap housing, the first and second traps are arranged on the trap housing, in particular on opposing end portions of the trap housing, a control unit compartment comprising a control unit, the control unit compartment is arranged on the trap housing, in particular in a middle portion, between the first and second traps, a base plate attached to a lower side of the trap housing.

A PCB may be arranged between the base plate and the trap housing.

A cover may be coupled to an upper side of the trap housing.

The control unit and/or the at least one identification device may be arranged in a space between the lower side of the trap housing and the base plate.

Preferably the control unit and/or the at least one identification device may be provided on the PCB.

In another aspect of the invention a small animal trap is presented. The small animal trap comprises a first trap and a second trap; a trap housing, wherein the first and second traps are arranged on the trap housing, in particular on opposing end portions of the trap housing; at least one identification device for providing a small animal identification signal based on an identification parameter; an energy source compartment being arranged on the trap housing, in particular in a middle portion of the trap housing, between the first and second traps; a control unit configured to process the small animal identification signal and to determine whether the first and/or second trap have caught a small animal, and to provide a trap status signal based on the determination; a base plate attached to a lower side of the trap housing; wherein the control unit and/or the at least one identification device are provided in space between the lower side of the trap housing and the baseplate, and a cover coupled to an upper side of the trap housing.

In another aspect a small animal trap is provided comprising: at least one trap; a trap housing, the at least on trap is arranged on the trap housing, in particular on one end portion of the trap housing; at least one identification device for providing a small animal identification signal based on an identification parameter; an energy source compartment being arranged on the trap housing; a control unit configured to process the small animal identification signal and to determine whether the at least one trap has caught a small animal, and to provide a trap status signal based on the determination; a base plate attached to a lower side of the trap housing; wherein the control unit and/or the at least one identification device are provided in space between the lower side of the trap housing and the baseplate.

Preferably, a printed circuit board, PCB, may be arranged between the base plate and the trap housing, wherein the control unit and/or the at least one identification device, or parts thereof, are provided on the PCB.

Preferably, the control unit and the at least one identification device, or parts thereof, are provided on the same PCB.

Small animals represent any animal, in particular mammals, which are identified as pests by the public. For instance, a small animal may be a mouse, a rat, or rodent but is not limited thereto.

The small animal trap may represent any trap or catching device for catching and/or neutralizing small animals. For instance, a small animal trap may be a mouse trap or rat trap but is not limited thereto. The small animal trap may be any mechanical, electronical, and/or biological trap but is not limited thereto.

The small animal trap comprises a first trap, a second trap, a trap housing, at least one identification device, an energy source compartment, a control unit, a base plate, and a cover but is not limited thereto.

The small animal trap may comprise at least one energy source, a first triggering sensor, a second triggering sensor, at least one indicator, a communication device, and/or at least one monitoring sensor but is not limited thereto.

The trap housing may represent any housing or casing of the small animal trap on or in which the first and second traps are arranged, mounted or provided.

The trap housing may be elongated and may comprise a middle portion being arranged between two opposing end portions.

The trap housing may be provided or made of plastic or metal but is not limited thereto.

The plastic may be a non-transparent, transparent or semi-transparent plastic. For instance, the trap housing may be made of plastic or aluminum or combination thereof, but is not limited thereto. The trap housing may have a rectangle, quadratic, triangular of polygonal form but is not limited thereto. The trap housing may be a single piece housing. Alternatively, the trap housing may be a multi-piece housing. When the trap housing is a multi-piece housing, the trap housing sub-elements may be releasably, e.g. by a bolt, or permanently fixed, snap fixed, etc. to each other.

The trap housing may comprise an upper side/upper surface, a lower side/lower surface, and at least three, preferably four, sidewalls. At least two of the four sidewalls may be arranged opposing to each other. The trap housing may comprise a trap housing base plate and trap housing side walls which may extend vertically from the trap housing base plate, in particular perpendicular, from the upper side/upper surface such that the two opposing sidewalls are vertically extended respectively elongated.

The trap housing side walls may be also called housing side walls and may have an identical height. A height of the trap housing may be in a range of 25% to 40%, preferably 30% to 35%, of the total height of the small animal trap. A height of the trap housing base may be in a range of 1% to 15% of the total height, of the small animal trap. A height of the trap housing side walls may be in a range of 15% to 30%, preferably 20% to 25%, of the total height of the small animal trap. A height of the trap housing side walls may be in a range of 50% to 70%, preferably 60% to 70%, of the height, in particular total height, of the trap housing. A height of the cover may be in a range of 30% to 50%, preferably 30% to 40%, of the total height of the trap. A length of the middle portion of the trap housing may be 20% to 40%, preferably 30%, of the total length of the trap housing. A length of each one of the end portions of the trap housing may be 30% to 40%, preferably 35%, of the total length of the trap housing. The trap housing may have an identical width over its lengths. Alternatively, the width of the trap housing may differ stepwise or continuously. A width of the trap housing base may be in a range of 90% to 98% of the total width of the trap housing.

The small animal trap, in particular the trap housing, may comprise a first and a second opening formed at opposing ends of the trap housing, in particular in the end portions of the trap housing, being covered by the cover. The opening may represent any opening in the trap housing being dimensioned in such a manner that at least the small animal can enter the opening. For instance, the opening has a surface area of 15 to 100 cm², preferably 50 cm², but is not limited thereto. The opening may have an oval, a round, a quadratic, a rectangular, or a polygonal form but is not limited thereto. The opening may be arranged in at least one sidewall of the trap housing but is not limited thereto. The opening may have elements protruding into the opening to prevent the animal from escaping out of the housing after it has entered the opening somewhat.

On the lower side/surface of the trap housing, in particular on the lower side/surface of the trap housing base, a base plate may be attached.

A space may be formed between the lower side/surface of the trap housing base.

On the upper side/surface of the trap housing, in particular on the trap housing side walls , a cover may be attached, mounted and/or coupled.

The base plate may represent any plate being arranged, mounted or attached on or coupled to the lower side/surface of the trap housing, in particular the lower side/surface of the trap housing base.

The base plate may have the same form or dimensions, shape or horizontal shape, as the footprint of the trap housing but is not limited thereto.

The base plate may comprise or may be made of the same material as the trap housing and/or the cover.

Preferably, the base plate may be at least partly made of a semitransparent, light guiding or transparent material.

Alternatively, the base plate may be made of a non-transparent and non-light-guiding material but includes at least one light guiding element being made of a light-guiding material. The base plate may have the same form, in particular shape or horizontal shape/width, as the trap housing but is not limited thereto.

The base plate may fully or at least partially horizontally protrude form the trap housing. In other words, the base plate may have a larger width than the trap housing and/or the cover such that the base plate at least partly extends over/above the sidewalls of the trap housing.

Alternatively, the base plate may be fully or at least partially embedded or arranged within a cavity provided in the lower side/surface of the trap housing, such that the lower side/surface of the trap housing, in particular trap housing base, and the base plate are planar, even, plain, smooth or providing a same level.

In other words, the base plate may have a smaller width than the trap housing and/or the cover. In case the base plate is at least partially embedded or arranged in the cavity, the cavity may comprise at least one opening, in particular an opening in the sidewall of the trap housing, through which the base plate, in particular a light guiding material or element, can extend horizontally. Alternatively, the base plate may extend vertically from the cavity at the lower side/surface of the trap housing, such that the lower side/surface of the trap housing, in particular trap housing base, and the base plate are not-planar, not-even, not-plain, not-smooth or provide different levels.

The base plate may be arranged, mounted or attached on or coupled to the trap housing in a releasably manner, e.g. by screws, clamps or clasps, but is not limited thereto.

A sealing element may be provided between the base plate and the lower side/surface of the trap housing. The sealing element might be an extra element accommodated in a groove of the base plate and/or lower side of the housing. The sealing might be also provided by an adhesive material glueing the base plate and the housing.

The sealing provides watertight encapsulation of the space to protect the control unit and//or the at the least one identification device from coming in contact with water.

The at least one sealing element may be arranged within a sealing element holding cavity but is not limited thereto.

An aspect of the invention is to provide a space which is watertight and encapsulates the electronics of the trap. This space is formed by the base plate, the lower side of the housing, the energy source compartment and the compartment cover. The base plate and the compartment cover are connected in a watertight manner to the single piece housing.

Thus, the PCB supporting all electronics parts and the energy source might be easily assembled between the housing and the base plate.

Alternatively, the base plate may be permanently attached, arranged, coupled or mounted to the trap housing, in particular the lower side/surface of the trap housing, by a waterproof adhesive and/or sealing material or by welding, but is not limited thereto. The base plate may comprise or form a space or printed circuit board cavity in which the printed circuit board might be fully embedded, arranged, provided or included.

The cover may represent any element being coupled to the upper side/surface of the trap housing, in particular on the trap housing side walls. Preferably, the cover may have a curved form forming the upper surface as a tunnel but is not limited thereto. The cover may comprise or may be made of the same material as the trap housing and/or the base plate. A height of the cover may be in a range of 60% to 75% of the total height of the small animal trap.

The printed circuit board, PCB, may represent any board including at least one electrically insulating layer and at least one electrically conductive layer. The PCB may be arranged between the base plate and the trap housing, in particular within the space or the printed circuit board cavity of the base plate. The control unit, the at least one identification device, the at least one indicator, the communication device, the at least one monitoring sensor, the reed switch and/or hall sensor may be provided on, in particular directly on, or connected to the printed circuit board.

The trap or trap element may represent any element of the animal trap being configured to catch, capture, trap or neutralize, i.e. control/kill, a small animal. For instance, the trap element comprises a small animal neutralization device for catching, capturing, and/or neutralizing a small animal and a triggering device for triggering the small animal neutralization device.

For instance, the small animal neutralization device may be a clamp as used in conventional mouse traps. The clamp may be pre-stressed / or pre-loaded by a spring from a rest position to a triggering position. The clamp may be pre-stressed manually by the user of the small animal trap or automatically by an electronic or mechanical clamp pre-stressing device. The clamp may be held by the triggering device in a triggering position. The clamp may be made of metal having e.g. a cover made of plastic. Alternatively, the small animal neutralization device may be a cage, a gas chamber, a poison injection chamber, an electric shock providing unit, a captive bolt pistol but is not limited thereto. The triggering device may be designed or is configured to be a weight sensor which triggers when a weight is exceeded, or a light barrier which triggers when a light barrier is broken, or a temperature sensor which triggers when a threshold temperature is exceeded, or a motion sensor which triggers when there is movement, or a touch sensor which triggers when touched mechanically, or a photosensitive element which triggers when the light changes, or a combination thereof. In other words, the triggering device prevents a movement, in particular a fast movement, of the clamp from the triggering position to a rest position and, when the triggering device is triggered, the movement of the clamp is released/enabled. The rest position may be the position in which the spring force of the spring is lowest, wherein the triggering position may be the position in which the spring force of the spring is highest. The triggering position and the rest position may differ by at least 45 degree, preferably 90 degrees, rotation of the clamp but is not limited thereto. The trap element may be fully or at least partially arranged within or on the trap housing, wherein the at least one trap opening provides access to the trap element. The trap element may further comprise a lure device in which a lure is provided or arranged. The lure device may be arranged at or on the triggering device but is not limited thereto.

In a preferred embodiment, when the small animal trap comprises two traps, a trap may be accessible via the first opening and the second trap may is accessible via the second opening. A trap may be arranged, located or mounted on the trap housing, in particular an upper side/surface of the trap housing base. The trap may be arranged fully or at least partially in the end portion of the trap housing. When the small animal trap is a multi-trap, in each end portion of the opposing end portions a trap or a separate trap is arranged. The trap may be exchangeable and/or releasable mounted or attached to the trap housing by at least one trap attaching component. The trap attaching component may be a screw or a clamp but is not limited thereto. In case the small animal trap comprises a plurality of traps, the size of the traps can be different from each other.

The identification device may represent any electrical or electronic device being able respectively configured to identify or measure an identification parameter indicating that a small animal in the small animal trap in an electronic manner respectively by using electronic means. For instance, the identification of small animals in the small animal trap may be provided by using at least one of a capacitive sensor but is not limited thereto. Therefore, the identification parameter may be a change in the capacitance due to an existence of a small animal but is not limited thereto. The identification device may be configured to be directly or indirectly communicatively connected by wire or wirelessly coupled to the control unit e.g. via the printed circuit board.

The identification device may be provided respectively arranged directly on or at the printed circuit board. Each trap may have its own identification device. In other words, the identification device may be arranged below, in particular directly below the trap but is not limited thereto. In case the small animal trap comprises a plurality of traps, each one of the pluralities of traps is provided with its own identification device such that each trap has its own identification device. Each one of the pluralities of identification devices may be identical or different. The identification device may be further able or configured for providing/generating a small animal identification signal. The small animal identification signal may represent any signal or data indicating that a small animal has been identified in the small animal trap. For instance, the small animal identification signal may be "YES" or "NO", "1" or "0", "small animal trapped" or "small animal not trapped", "blocked" or "non-blocked", e.g. it could be 0V or 3.3V, but is not limited thereto.

The energy source compartment may represent any chamber or compartment which is arranged on the trap housing, in particular an upper surface or side, of the trap housing base. The energy source compartment may be arranged in the middle portion of the trap housing.

The energy source compartment may have the same height as the trap housing side walls. Alternatively, the height of the energy source compartment may be lower or higher than the trap housing side walls. The energy source compartment may have the same width as the trap housing base or may have a smaller width than the width of the trap housing base. The energy source compartment may comprise at least one triggering sensor holding element configured for holding or securing the triggering sensor against a vertical and horizontal shifting. The energy source compartment may have a rectangular, quadratic, triangular or polygonal form but is not limited thereto. The energy source compartment may be integrally made with the trap housing.

The energy source compartment may have an opening at its upper side. In a first embodiment, the energy source compartment may be open at its lower side. The holding elements for the energy sources are mounted on the PCB.

Within the energy source compartment, at least one energy source may be arranged. When the at least one energy source is arranged on the printed circuit board, the at least one energy source may extend from the printed circuit board into the energy source compartment.

The upper opening of the energy source compartment may be removably or releasably closed by a compartment cover. The opening is provided for exchanging the energy source.

The compartment cover may be configured for closing the opening and may comprise or may be made of the same material as the energy source compartment, the trap housing, the base plate and/or the cover but is not limited thereto. For instance, the compartment cover may be fixed or mounted on the opening by screws or clamps but is not limited thereto. Additionally, the compartment cover may be movably coupled to the energy source compartment such that the compartment cover may be a hatch but is not limited thereto. The compartment cover may comprise a sealing element which is provided between the compartment cover and the energy source compartment for isolating, in particular waterproof or hermetically insulating, the energy source compartment. The compartment cover may comprise a sealing element holding groove in which the sealing element is located or arranged. The sealing element may have a higher elasticity coefficient than the trap housing, the cover, and/or the base plate. The sealing element may be made of silicone but is not limited thereto. The compartment cover may comprise at least one energy source securing element. The at least one energy source securing element may be configured to press down the at least one energy source. The energy source securing element may be a part of the compartment cover or may be a separate structure being attached to the compartment cover. The energy source securing element may be formed as rip or protrusion for holding down /fixing the energy source inside the energy source compartment. The energy source securing element may comprise or may be made of the same material as the compartment cover. The compartment cover may comprise at least one triggering sensor holding element configured for holding or securing the triggering sensor against a vertical and horizontal shifting.

The energy source may be any unit being configured for receiving or providing energy, in particular electrical energy, power or current, to the at least one identification device, the control unit and/or the first and second triggering sensors, etc. The energy source may be configured to be controlled by the control unit and/or a power management unit. For instance, the energy source may be a socket for receiving a plug, a power cable with a plug, at least one battery, a wireless charging element, an accumulator, and/or a photovoltaic energy providing unit but is not limited thereto. In case the energy source is at least one battery or an accumulator, the energy source may be arranged within an energy source holder. The energy source itself or the energy source holder may be directly arranged on the printed circuit board. In an embodiment, the at least one energy source may be an exchangeable and/or rechargeable energy source.

The triggering sensor and/or trap element triggering status identification device may represent any device being configured for identifying a triggering status of each one of the at least one trap elements. The triggering status may be "blocked" or "non-blocked", or "1" or "0" or 0V or 3.3V, but is not limited thereto. The triggering sensor may be further configured for providing a triggering status signal. For instance, the triggering status signal may be "YES" or "NO", "1" or "0", "small animal trapped" or "small animal not trapped", "blocked" or "non-blocked" but is not limited thereto. The triggering sensor may be directly or indirectly by wire or wireless communicatively coupled to/with the control unit and the energy source. The triggering sensor may be directly or indirectly by wire or wireless communicatively coupled to/with the printed circuit board. The triggering sensor may be a press key or pressure switch but is not limited thereto. The triggering sensor may be arranged or provided in a triggering sensor holding element. The triggering sensor holding element may be provided, in particular manufactured, out of plastic or metal but is not limited thereto. For instance, the triggering sensor holding element may be made of aluminum but is not limited thereto. The triggering sensor holding element may be made of the same material as the trap housing, the base plate, the cover and/or the energy source compartment. The triggering sensor may be releasably, e.g. by a bolt, or snap fixed attached to the triggering sensor holding element. In a multi-trap small animal trap, each trap of the plurality of traps may comprise its own triggering sensor. The triggering sensor may be attached to the trap housing and/or to the energy source compartment.

The control unit may represent any unit being configured for identifying/determining by at least of the small animal identification signal if the first and/or second trap has caught a small animal. The control unit may include a first receiving unit for receiving the small animal identification signal. The control unit may be configured for providing a trap status signal based on the small animal identification signal. The control unit may be directly arranged on the printed circuit board. The control unit may comprise a second receiving unit configured for receiving the first trap triggering signal and/or a second trap triggering signal. The second receiving unit may comprise e.g. two sub-units, wherein each sub-unit receives one of the trap triggering signals. In this context, the control unit may be configured for determining whether the first and/or the second traps have caught a small animal and for providing a trap status signal based on the small animal identification signal and the first and/or second trap triggering signal. In a multi-trap small animal trap, the control unit may receive from each triggering sensor a separate trap triggering signal. Further, the control unit may comprise a processor or micro computing unit, MCU, for processing the received signals for providing/determining a trap status signal. The trap status signal may be any signal or data indicating the status of the small animal trap, i.e. if the at least one trap element has caught a small animal or not. For instance, the trap status signal may be "full" or "empty", "YES" or "NO", "1" or "0", "small animal trapped" or "small animal not trapped", "blocked" or "not-blocked" but is not limited thereto.

As an example, the trap status signal may be set to "1" if the identification device has identified a small animal and the triggering sensor has identified a change in the status of the triggering status of the trap element. Otherwise, the trap status signal may be set to "0". Alternatively, the trap status signal may be any signal or data indicating the status of the small animal trap, i.e. if the first and/or second trap has caught a small animal or not, by separately presenting, including, or providing the small animal identification signal, the first trap triggering signal and/or the second trap triggering signal. For instance, the trap status signal may be [small animal identification signal, the first trap triggering signal, the second trap triggering signal]. Therefore, when the first trap of the small animal trap has caught a small animal, the trap status signal may be [1,1,0] but is not limited thereto. The control unit may further comprise a memory unit, for storing the received signals. The control unit may be directly or indirectly by wire or wireless communicatively or electrically coupled to at least one indicator, to a communication device, and/or to at least one monitoring sensor. The control unit may be configured for providing the trap status signal to the communication device. The control unit may receive at least one monitoring signal. The control unit may be configured for forwarding the monitoring signal to the communication device without processing or may be configured for processing the monitoring signal but is not limited thereto. The control unit may be configured for identifying if the monitoring signal includes information exceeding a predefined threshold indicating a threatening and/or dangerous state in/within the small animal trap.

Further, the control unit may be further configured for controlling the at least one energy source. For controlling the energy source the control unit may comprise a power management unit. For instance, the control unit may be configured for controlling the energy source in such a manner, that the energy source temporarily provides energy to the identification device and/or the triggering sensor, e.g. once or twice a day. In other words, the control unit may be configured for controlling the energy source in such a manner that the small animal trap may be in an active mode and in an energy saving mode (deep sleep). In the active mode the identification device and the triggering sensor, and the control unit are provided with energy. In the energy saving mode the control unit and e.g. one of the identification devices or the triggering sensor may be not provided with energy. In this case the control unit may receive a signal/data from the one active device or sensor, wherein the control unit will control the energy source to activate or provide energy to the rest of the devices of the small animal trap. For instance, when the identification device receives a change in the capacitance caused by a small animal in the small animal trap the control unit will activate the triggering sensor for identifying if the trap has triggered. The energy saving mode may be provided by a deep sleep mode but is not limited thereto. Further, based on the received signal/data, in particular characteristics of the signal/ data, the control unit may be able to determine the kind of small animal caught but is not limited thereto.

Alternatively, the energy source may control the control unit by providing energy to the control unit. In this context, the small animal trap may be in an energy saving mode until the trigger sensor indicates a triggering of the trap. The identification of the triggering of the trap may induce the energy source to provide the control unit with energy such that the small animal trap is waked up to be in active mode.

The indicator may represent any element configured for providing or displaying the trap status signal optically to a user of the small animal trap. For instance, the indicator may be a light emitting device, LED, or a plurality of LEDs. The indicator may face or may be directed to the base plate. The indicator may be configured for receiving the trap status signal or any corresponding signal from the control unit. For instance, the color of the LED may be red, green and/or orange, yellow but is not limited thereto. The number of light emitting diodes, LEDs, may correspond to the number of traps, in particular number of different small identification signals and different trap triggering signals, being processed by the control unit for determining whether the at least one trap element has caught a small animal, and for providing a trap status signal based on the determination. For instance, the indicator may include three light emitting diodes, LEDs - one green one, one red one, one yellow one. The green one may be lit up when the trap status signal may be [0, 0, 0], i.e. when none of the signals indicate a catch of a small animal. Therefore, the green LED may indicate or show that the small animal trap is ready for action. The orange/yellow one may be lit up when the trap status signal may be e.g. [1, 0, 0], i.e. when at least one small animal identification signal indicates a catch of a small animal but no trap triggering signal indicate a catch of a small animal. Therefore, the orange LED may indicate or show that the small animal trap has to be controlled or checked by the user. The red one may be lit up when the trap status signal is [1, 1, 0], i.e. when a small animal identification signal indicates a catch of a small animal and the trap triggering signal also indicate a catch of a small animal. Therefore, the red LED may indicate or show that the small animal trap has caught a small animal.

Alternatively, there might be only one LED indicating different status of the trap by different blinking periods.

The monitoring sensor may represent any sensor being configured for measuring at least one parameter in/within the small animal trap, in particular in the energy source compartment and/or printed circuit board cavity. The monitoring sensor may be provided or arranged in the energy source compartment and/or on the printed circuit board. The monitoring sensor may be directly or indirectly by wire or wireless communicatively or electrically coupled to the control unit. The at least one parameter may be temperature and/or humidity but is not limited thereto. The monitoring sensor may be further configured for providing a monitoring signal including monitoring information. The monitoring information may be based on the measured parameter but is not limited thereto. For instance, the monitoring information may indicate a temperature, a humidity, a temperature increase, a humidity increase but is not limited thereto. The monitoring sensor may be configured for permanently measuring the parameter or for measuring the parameter in a predefined interval. The monitoring sensor may be configured for permanently providing monitoring information and a monitoring signal or for providing monitoring information and a monitoring signal in a predefined interval or only when an exceeding of a predefined threshold is identified. The monitoring signal may be transmitted via the communication device to at least one external unit, in particular at least one small animal trap monitoring device.

The communication device may represent any device being configured for providing the trap status signal to an external unit, in particular to a small animal trap monitoring device, but is not limited thereto. The external unit may be a small animal trap monitoring device or a mobile device such as a mobile phone but is not limited thereto. The communication device may be configured for providing the trap status signal to a plurality of external units, in particular to a plurality of small animal trap monitoring devices or a plurality of receiver units of a plurality of small animal trap monitoring devices. The communication device may use LoRA WAN, Wi-Fi, NF, NB-IOT or radio for communicating with the external unit, in particular to a small animal trap monitoring device, but is not limited thereto. Besides the trap status signal, the communication device may be configured for transmitting a small animal trap information to a small animal trap monitoring unit and/or an external device. For instance, small animal trap information may include the status, in particular the charge state, of the energy source but is not limited thereto. Additionally, or alternatively, alongside the trap status signal, the communication device may be configured for transmitting a monitoring signal including monitoring information to a small animal trap monitoring unit and/or an external device.

The reed switch and/or hall sensor may represent any switch being configured for activating or deactivating or mode switching of the control unit.

In a preferred embodiment, the reed switch may be only configured for activating the control unit. The reed switch may be an electromechanical switch operated by an applied magnetic field. The reed switch may comprise a pair of ferromagnetic flexible metal contacts in a hermetically sealed glass envelope. The contacts are normally open, closing when a magnetic field is present, or they may be normally closed and open when a magnetic field is applied. The switch may be actuated by an electromagnetic coil, making a reed relay, or by bringing a permanent magnet near it. When the magnetic field is removed, the contacts in the reed switch return to their original position. Alternatively, when the magnetic field is removed, the contacts in the reed remain in the connection position and only return to their original position when another magnetic field is applied. The reed switch may be arranged on or at the printed circuit board or may be directly or indirectly by wire or wireless communicatively coupled to the control unit.

There might by a reed switch for activating the trap from a transport mode.

Furthermore, there might be a hall sensor, located at a different location of the PCB than the reed switch. The hall sensor is used for activating different operation modes of the trap.

By including at least one identification device and an energy source compartment into the small animal trap, the number of false triggers and false identification of caught small animals can be significantly reduced such that the used manpower and working time for keeping up the protection against the vermin or unwanted small animals can be significantly reduced and the lifetime of the small animal trap can be significantly increased.

In an embodiment, the small animal trap further comprising at least one energy source for providing energy to the at least one identification device and the control unit, wherein the at least one energy source is arranged within the energy source compartment, preferably the at least one energy source is an exchangeable and/or rechargeable energy source.

By arranging the energy source in the energy source compartment, the energy source can be reliably prevented from external influences, e.g. hits. Therefore, the lifetime of the energy source and the small animal trap can be significantly increased.

In an embodiment, the small animal trap further comprising a first triggering sensor for identifying a triggering status of the first trap and for providing a first trap triggering signal and a second triggering sensor for identifying a triggering status of the second trap and for providing a second trap triggering signal, wherein the control unit is configured for receiving the first trap triggering signal and/or the second trap triggering signal and/or at least one small animal identification signal for determining whether the first and/or the second traps have caught a small animal and for providing a trap status signal.

By using triggering sensors, a triggering status and a trap triggering signal can be provided indicating if the trap has triggered. Therefore, the reliability of an identification of a catch of a small animal in a small animal trap can be increased.

In an embodiment, the first and second triggering sensors may be attached to the trap housing and/or to the energy source compartment.

In an embodiment, the at least one identification device may be a capacitive sensor for measuring a capacitive change in the small animal trap due to an existence of a small animal.

By using a capacitive sensor, the effectivity and or the reliability of the identification of a small animal in the trap opening can be significantly improved.

In an embodiment, the energy source compartment may be open to an upper side forming an opening, wherein a compartment cover may removably close the opening of the energy source compartment.

A sealing element is provided between the compartment cover and the control unit compartment for isolating the energy source compartment.

By providing the energy source compartment with an opening and a compartment cover, an exchangeability of the energy source can be provided. Therefore, the lifetime of the small animal trap can be increased because defect or erroneous energy sources can be easily exchanged.

By using a sealing element the energy source compartment can be isolated, in particular waterproof isolated, such that the direct contact of the energy source with the environment, in particular humidity and water, can be reliably prevented. Therefore, the lifetime of the energy source and the small animal trap can be increased.

In an embodiment, the compartment cover may comprise at least one energy source securing element configured for securing the at least one energy source.

Preferably the energy source securing element is formed as rip or protrusion for holding down the energy source inside the energy source compartment.

By providing at least one energy source securing element, an unwanted vertical and/or horizontal movement of the energy source within the energy source compartment can be reliable prevented. Therefore, the probability of the occurrence of hit damages of the energy source can be significantly reduced.

In an embodiment, the at least one energy source is also provided on the PCB.

By arranging the energy source directly on the printed circuit board, the compactness of the small animal trap, in particular the trap housing can be increased.

In an embodiment, the small animal trap comprises a first opening and a second opening formed at opposing ends of the trap housing covered by the cover, wherein the first trap is accessible via the first opening and the second trap is accessible via the second opening.

In an embodiment, the base plate is made at least partly of a semitransparent, light guiding or transparent material and/or the base plate is attached to the trap housing by a sealing material.

By using a semitransparent, light guiding or transparent material, a visual or optical inspection of the small animal trap may be enabled.

By using a sealing material to attach the base plate to the trap housing, the control unit, preferably on the printed circuit board can be waterproof isolated. Therefore, the lifetime of the printed circuit board can be significantly increased.

So the trap housing having the energy source compartment integrally made thereon and being closed at its bottom side by the base plate provide a space being water proof and/or shock resistant for accommodating the control unit and the identification device and the energy sources and other electrical components.

In an embodiment, the at least one identification device is electrically connected to the control unit, and/or the at least of one identification device comprises a first identification device and a second identification device, wherein the first identification device is provided to the first trap and a second identification device is provided to the second trap.

The first and second identification devices may be realized as capacitive sensors. When an animal touches the surface of the housing at a location where the capacitive sensor is located a capacitance variation is triggered, which is used to derive the first or second small animal identification signal.

By providing each trap with its own identification device, the reliability of the identification of a catch of a small animal by the small animal device can be significantly increased.

In an embodiment, the small animal trap further comprises at least one indicator configured for displaying the trap status signal determined by the control unit, wherein the at least one indicator is a light emitting device, LED, facing the base plate, and/or wherein the at least one indicator is electrically coupled to the control unit. By using an indicator the trap status signal can be optically provided to a user.

In an embodiment, the base plate fully or at least partially horizontally exceeds the trap housing.

By constructing the base plate so that the base plate exceeds the trap housing fully or at least partially horizontally, the bearing area can be increased such that the small animal trap can be placed in an increased stable manner. Additionally, by constructing the base plate so that the base plate exceeds the trap housing fully or at least partially horizontally, the light provided by the indicator forwarded via light guiding capabilities of the base plate can be better identified or better seen by a user of the small animal trap.

In an embodiment, the small animal trap further comprises at least one monitoring sensor, wherein the at least one monitoring sensor is provided on the PCB and is electrically coupled to the control unit; and/or wherein the monitoring sensor is configured for measuring at least one parameter in the small animal trap, preferably temperature and/or humidity of the energy source compartment, and for providing a monitoring signal based on the at least one parameter.

By using a monitoring sensor being arranged in the small animal trap, i.e. in the energy source compartment and/or printed circuit board cavity, it can be checked, monitored, and proofed if the conditions in the small animal are ideal and remain constant or change to a critical condition, i.e. conditions in which the energy source or the printed circuit board get damaged. Therefore, the interval of technical checking the small animal trap can be increased.

In an embodiment, the small animal trap further comprises a communication device for providing the trap status signal and/or the monitoring signal to an external unit.

By including a communication device into the small animal trap, an including of a plurality of small animal traps to a small animal trap system can be enabled.

In an embodiment, the small animal trap further comprises a reed switch, wherein the reed switch is configured for activating or deactivating or mode switching of the control unit.

By using a reed switch, the small animal trap, in particular, the control unit of the small animal trap can be activated, deactivated or switched in mode without having an exposed switch. Therefore, shocks and collisions of objects against the small animal trap, in particular the reed switch, may not lead to an unwanted activation, deactivation, or mode change. Therefore, the reliability of controlling the small animal trap can be significantly increased.

In an embodiment the triggering device for triggering the small animal neutralization device, preferably the small animal neutralization device is a clamp which is pre-stressed by a spring from a rest position to a triggering position and which is held by the triggering device in the triggering position and moves back to the rest position when the triggering device is triggered, preferably the triggering device is designed as a weight sensor and triggers when a weight is exceeded and/or a motion is detected, or is designed as a light barrier and triggers when a light barrier is broken, or is designed as a temperature sensor and triggers when a threshold temperature is exceeded, or is designed as a motion sensor and triggers when there is movement, or is designed as a touch sensor and triggers when touched mechanically, or is designed as a photosensitive element and triggers when the light changes or a combination thereof.

In further aspect, a small animal trap system is presented. The small animal trap system comprises at least one small animal trap as described above, a monitoring device being communicatively coupled to at least one small animal trap and being configured to receive one or more trap status signals, wherein the monitoring device includes a receiving unit configured for receiving the trap status signal of a communication device and a display unit configured for providing and/or displaying the received trap status signal to at least one user of the small animal trap system.

The monitoring device, in particular small animal trap monitoring device, may represent any device being configured for monitoring at least one, in particular a plurality of small animal traps in the small animal trap system. The monitoring device may comprise a receiving unit for receiving a trap status signal of a communication device. Alongside the trap status signal, the receiving unit may be configured for receiving a small animal trap information. For instance, small animal trap information may include the status, in particular the charge state, of the energy source but is not limited thereto. Additionally, the small animal trap monitoring device may further comprise a processor and a display unit for providing and/or displaying the received trap status signal to at least one user of the small animal trap system. For instance, the display unit may be a screen or a touch screen but is not limited thereto. Further, the monitoring device may comprise another receiving unit and a warning providing unit. The other receiving unit may be configured for receiving the monitoring signal. The warning providing unit may be configured for providing a warning or alarm when the monitoring signal, in particular the monitoring information/data exceeds a pre-defined threshold. For instance, when the warning providing unit identifies that the temperature in the energy source compartment is too high, the warning providing unit may provide/generate an alarm or warning and transmits this alarm or warning to at least one user of the small animal trap.

In an embodiment, the monitoring device further comprises another receiving unit configured for receiving the monitoring signal, and a warning providing unit configured for providing a warning when the monitoring signal exceeds a pre-defined threshold.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.

### BRIEF DESCRIPTION OF THE DRAWINGS

In the following, the disclosure is further described with reference to the enclosed figures:
Fig. 1 illustrates components of a small animal trap of the invention in an unassembled manner.
Fig. 2 illustrates an exterior view on the small animal trap of Fig. 1.
Fig. 3 illustrates a detailed view on a trap housing of the small animal trap of Figs. 1 and 2.
Fig. 4 illustrates a side view on the small animal trap according to Figs. 1 to 3.
Fig. 5 illustrates a component cover of the small animal trap as shown in Figs. 1 to 4.
Fig. 6 illustrates a bottom side of the base plate as shown in Fig. 1 to 5;
Fig. 7 illustrates an upper side of the printed circuit board shown in Fig. 1 to 6;
Fig. 8 illustrates a lower side of the printed circuit board according to Fig. 1 to 7;
Fig. 9 illustrates the functional connection of elements of the small animal trap ;
Fig. 10 illustrates a use of a magnet for actuating a reed switch of the small animal trap;
Fig. 11 illustrates a removed magnet for the reed switch of the small animal trap;
Fig. 12 illustrates a schematic overview of a small animal trap system.
Fig. 13 illustrates a monitoring device of the small animal trap system of Fig. 12.
Fig. 14 is as flow chart for an energy saving mode of the small animal trap.

### DETAILED DESCRIPTION OF EMBODIMENT

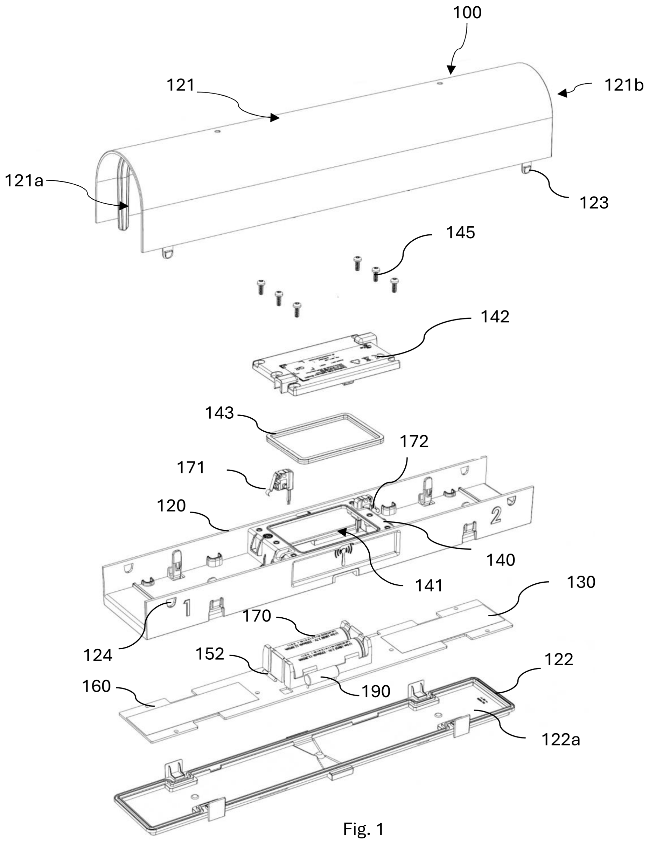

Fig. 1 shows a detailed view of a small animal trap of the invention in an unassembled manner. The small animal trap 100 comprises a first trap 111 (not shown), a second trap 112 (not shown), a trap housing 120, at least one identification device 130, an energy source compartment 140, a control unit 150 (not shown), a base plate 122, a printed circuit board 160, and a cover 121 but is not limited thereto. The base plate 122 comprises or forms a space or printed circuit board cavity 122a. The base plate 122 is made of a semi-transparent material having light-guiding capabilities. Within the printed circuit board cavity 122a, a printed circuit board 160 is fully arranged or embedded. The printed circuit board 160 comprises at least one identification device 130 or the at least one identification device 130 is provided on the printed circuit board 160. Furthermore, the energy source 170 is arranged on and/or is electrically connected to the printed circuit board 160. The base plate 122 is arranged or attached to a lower (bottom) side/surface of the trap housing 120. The trap housing 120 comprises middle portion 120b and two opposing end portions 120a, wherein in the middle portion, the energy source compartment 140 is arranged. The energy source compartment 140 may comprise an opening 141 extending vertically through the trap housing 120. The opening 141 can be covered or closed by the component cover 142 which is releasably mounted to the energy source compartment 140 by screws 145 or other mounting elements. Between the compartment cover 142 and the energy source compartment 140, a sealing element 143 is arranged. The cover 121 is releasably attached respectively mounted on an upper side/surface of the trap housing 120 by cover attaching components 123 at the cover 121 which are attached/mounted to cover attaching cavities at or in the trap housing 120. The cover 121 fully covers the two opposing end portions 120a and the middle portion 120 b of the trap housing.

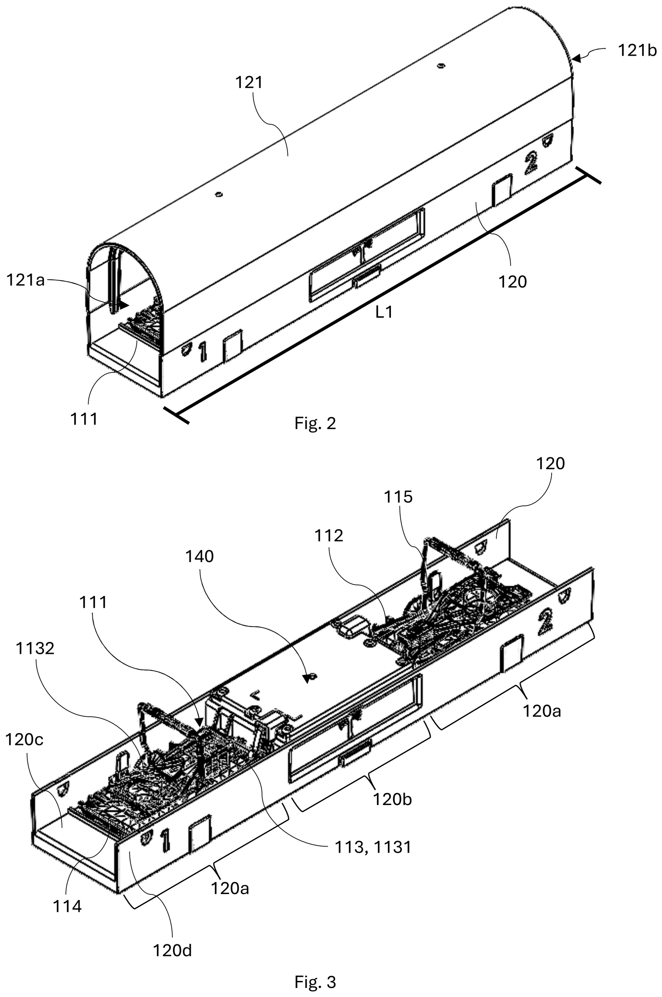

Fig. 2 shows an exterior view of the small animal trap of Fig. 1 in an assembled condition. The trap housing 120 and the cover 121 providing, in an assembled condition, a tunnel, wherein the tunnel ends and starts with the opposing end portions 120a. The tunnel, in particular, the cover 121 and the trap housing 120 may comprise a first opening 121a and a second opening 121b of the tunnel. The small animal trap has a length L1 representing the total length of the tunnel respectively the sum of the length of the two opposing end portions 120a and the middle portion 120b. Within the tunnel, in particular within the end portions 120a of the trap housing 120, the traps 111 and 112 are arranged. The openings 121a and 121b are dimensioned in such a manner, that a small animal can enter the openings 121a and 121b.

Fig. 3 shows a detailed view of the trap housing 120 of the small animal trap of Figs. 1 and 2. The trap housing 120 comprises two opposing end portions 120a and a middle portion 120b. The middle portion 120b is fully covered by the energy source compartment 140. The trap housing 120 comprises a trap housing base 120c and on the upper side/surface thereof two upright trap housing side walls 120d. The trap housing side walls 120d extend perpendicularly from the trap housing base 120c. The first and second traps 111, 112 are provided at the end portions 120a on the trap housing base 120c, respectively. The first and second traps 111 and 112 both comprise a small animal neutralization device 113. The small animal neutralization device 113 comprises a clamp 1131 which is pre-stressed by a spring 1132. The pre-stressed clamp 1131 is held in a triggering position by a triggering device 114. The triggering device is a pressure sensor. Both traps 111 and 112 are mounted or snapped into receptacles on the trap housing base 120c by at least one trap attaching component 115. The trap attaching component 115 comprises a clamp and or hooks and/or protrusions.

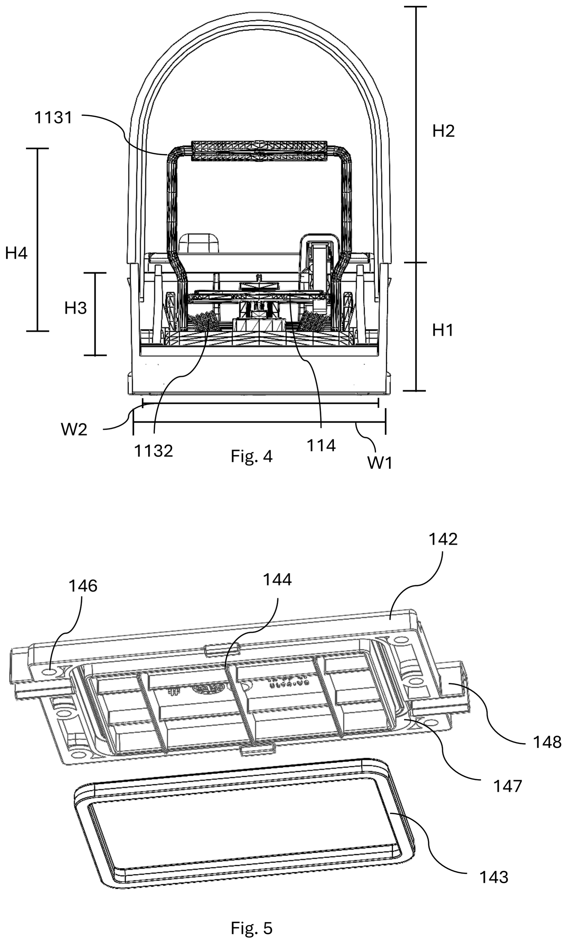

Fig. 4 shows a side view on the small animal trap according to Figs. 1 to 3. The size of the tunnel, i.e. the size of the cover 121, the size of the trap house trap housing 120 and the size of the energy source compartment 140 are provided in such a manner that the tunnel is continuous, i.e. it is possible to see through from the first opening 121a to the second opening 121b. The height H1 of the trap housing 120 is in a range of 25% to 40%, preferably 30% to 35%, of the total height H1 plus H2 of the small animal trap 100. A height H2 of the cover 121 is in a range of 60% to 75%, preferably 65% to 70%, of the total height H1 plus H2 of the small animal trap 100. The height of the trap housing base 120c is in a range of 1% to 15%, preferably 10%, of the total height H1 plus H2 of the small animal trap 100. The height of the trap housing side walls 120d are in a range of 15% to 30%, preferably 20% to 25%, of the total height H1 plus H2 of the small animal trap 100. The height of the trap housing extensions 120d are in a range of 50% to 70%, preferably 60% to 70%, of the height H1 of the trap housing 120. The height of the trap housing base 120c is in a range of 30% to 50%, preferably 30% to 40%, of the height H1 of the trap housing 120. The length of the middle portion 120b of the trap housing 120 is 20% to 40%, preferably 30%, of the total length L1 of the trap housing 120. The length of each one of the end portions 120a of the trap housing 120 is 30% to 40%, preferably 35%, of the total length L1 of the trap housing 120. The width W1 of the trap housing 120 is identical, i.e. does not differ stepwise or continuously. The width W2 of the trap housing base 120c is in a range of 90% to 98% of the width W1, in particular total width, of the trap housing 120. The width of each one the trap housing side walls 120d is in a range of 2% to 5% of the width W1, in particular total width, of the trap housing. The height H4 of the clamp 1131 is provided in such a manner that the clamp 1131 can move freely, without any interruption, from the triggering position to the rest position inside the tunnel. Additionally, the height H4 and form of the clamp 1131 is provided such that the clamp 1131 in the triggering position prevents that a small animal can enter the middle portion 120b of the trap housing 120. The height H3 of energy source compartment 140 is smaller than the height of the trap housing side walls 120d. The width of the energy source compartment 140 is identical to the width W2 of the trap housing base 120c.

Fig. 5 shows a detailed view of a component cover of the small animal trap according to Figs. 1 to 4. The component cover 142 is a single piece cover mounted to the energy source compartment by screws 145 extending through mounting holes 146. The compartment cover 142 may comprise an inner part and an outer part. The outer part encircles the inner part of the compartment cover 142. The inner part and the outer part are separated from each other by a sealing element holding cavity 147. Within the inner part of the compartment cover 142, the energy source securing element 144 is arranged respectively located. The energy source securing element 144 is an integral part of the compartment cover 142. The energy source securing element 144 comprises a plurality of vertically and horizontally extending ribs. The mounting holes 146 are arranged in the outer part of the compartment cover 142. Additionally, the outer part of the compartment cover 142 comprises a triggering sensor holding element 148. The sealing element 143, formed e.g. of thermoplastic elastomer is arrange in the sealing element holding cavity 147..

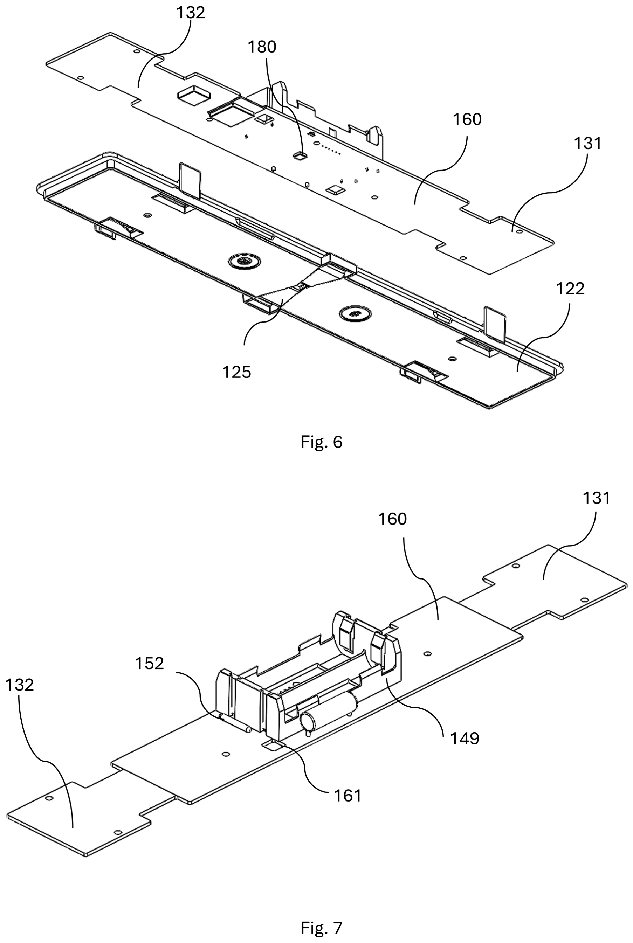

Fig. 6 shows a detailed view on an under side of the base plate of the small animal trap according to Fig. 1 to 5. The base plate 122 comprises or is made of a non-transparent material. The base plate 122 comprises one or more horizontally extending portions 125 being made of a light-guiding material, i.e. a light-guiding element. The horizontally extending portion 125 is arranged or located at the base plate 122 in such a manner that an indicator 180, in particular a light emitting diode, LED, faces or is directed to the horizontally extending portion 125. The indicator 180 may extend within the horizontally extending portion 125 but is not limited thereto. The horizontally extending portion 125 protrudes out of the outer edges of the edges of the housing 120 to allow a user to recognize parts of the horizontally extending portion 125 protruding partly out of the circumference of the housing. So any optical signal output by the indicator 180 is received by the base plate 120 and guided therein to the outer edges of the base plate, in particular to the horizontally extending portion 125 to allow a user to recognize the light signal.

Fig. 7 shows a detailed view on an upper side of the printed circuit board according to Fig. 1 to 6. The first identification device 131 is arranged in a first end portion of the printed circuit board 160 and the second identification device 132 is arranged in a second end portion being opposing to the first end portion of the printed circuit board 160. In the middle portion of the printed circuit board, the energy source holder 149, in particular a battery holder, is arranged. The printed circuit board 160 and the energy source holder 149 are electrically coupled to each other. Additionally, in the middle portion of the printed circuit board 160, the reed switch 152 is arranged. The reed switch 152 is arranged adjacent to the energy source holder 149. Furthermore, in the middle portion of the printed circuit board 160, a plurality of cutout or openings 161 are arranged for connecting the triggering sensors 171 to the printed circuit board 160.

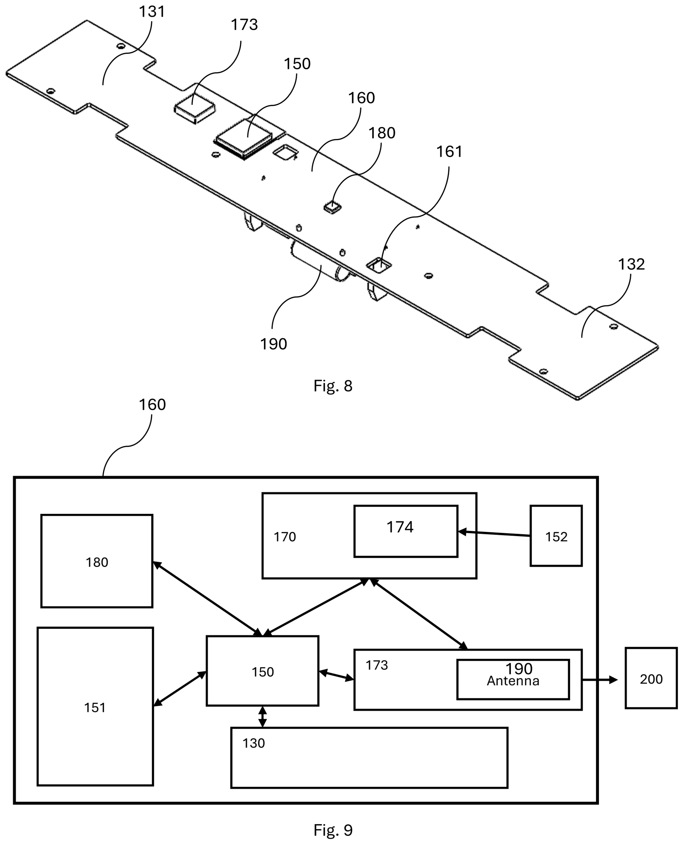

Fig. 8 shows a detailed view on a lower side of the printed circuit board according to Fig. 1 to 7. On the lower side of the printed circuit board 160, the control unit 150 is arranged as well asthe indicator 180, the energy management device 174 and the communication device 173. The control unit 150, the indicator 180, the energy management device 174, and the communication device 173 may be arranged all over the whole printed circuit board 160 or only in a part of the printed circuit board 160.

Fig. 9 shows an electrical connection of the elements on the printed circuit board according to Figs. 7 or 8. The control unit 150, the at least one identification device 130, the at least one monitoring sensor 151, the communication device 173, the indicator 180, the reed switch 152, and the energy source 170 are arranged on the printed circuit board 160. The at least one monitoring sensor 151 is communicatively coupled to the control unit 150. The at least one identification device 130 is communicatively coupled to the control unit 150. The indicator 180 is communicatively coupled to the control unit 150. The communication device 173 is communicatively coupled to the control unit 150 and the energy source 170. The communication device 173 comprises at least one antenna 190. One or more antennas 190 might be placed above and/or below the PCB. The energy source 170 is electrically coupled to the control unit 150 and the communication device 173. The energy source 170 comprises an energy management unit174. The reed switch 152 is only connected to the energy source 170 respectively the energy management unit 174. Therefore, the reed switch 152 is configured such that, when activated, it controls energy to be provided directly or indirectly from the energy source 170 to the control unit 150, the indicator 180, the at least one monitoring sensor 151, and the at least one identification device 130.

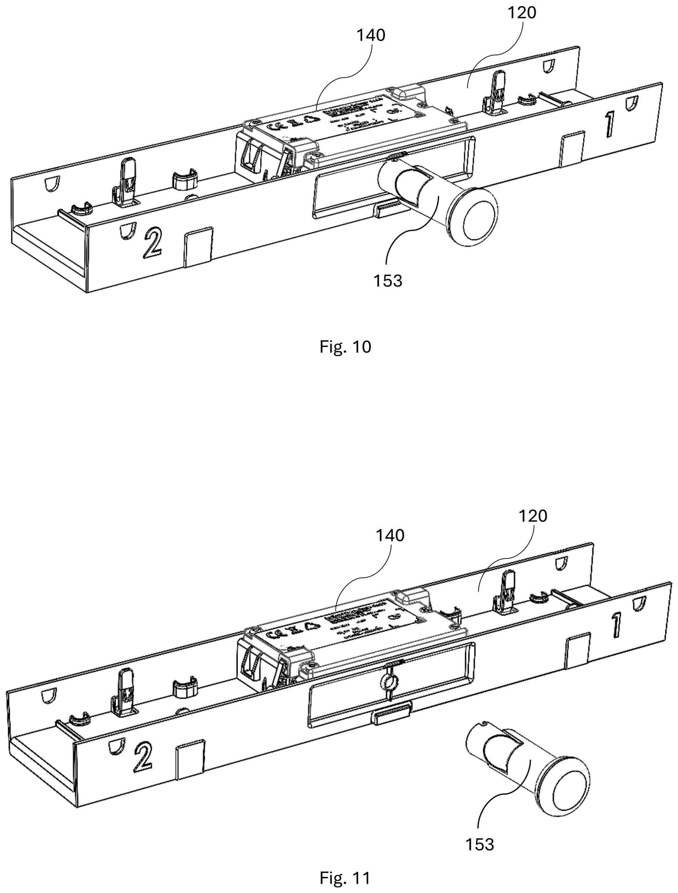

Fig. 10 shows a use of a magnet for providing a magnet field to the reed switch 152. When the magnet 153 is positioned by the user near to the reed switch 152, the magnet field of the magnet 153 activates and/or deactivates the reed switch 152. The reed switch 152 is arranged on the printed circuit board 160 in such a manner, that the reed switch is activatable and/or de-activatable, when the magnet 153 is held respectively provided on a sidewall of the trap housing 120. The magnet 153 can approach the housing from a side (as illustrated) or from below or any other suitable position.

Fig. 11 shows a removed magnet for providing a magnet field to a reed switch 152. When the magnet 153 is released from the sidewall of the trap housing 120, i.e. when the magnet field of the magnet 153 does not have an influence on the reed switch 152, the reed switch 152 remains in the activate-position and/or deactivate-position.

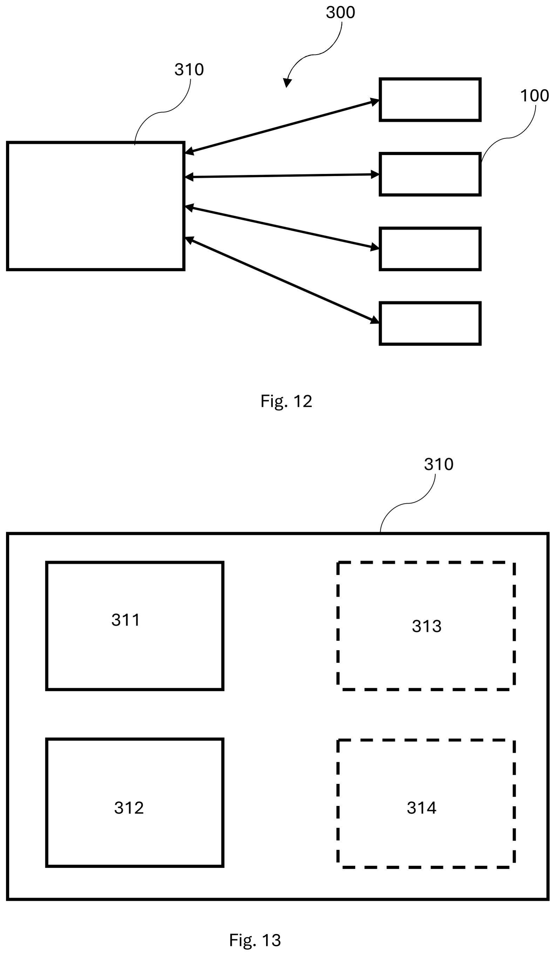

Fig. 12 shows a small animal trap system. The small animal trap system 300 comprises a monitoring device 310 and a plurality, in particular four, small animal traps 100 as described above. Each one of the four small animal traps are directly wireless communicatively coupled to the monitoring device 310.

Fig. 13 shows a monitoring device of the small animal trap system of Fig. 12. The monitoring device 310 comprises a receiving unit 311 and a display unit 312. The receiving unit 311 is configured for receiving the trap status signal of a communication device 190 from each one of the small animal traps 100. The display unit 312 is configured for providing and/or displaying the received trap status signal to at least one user of the small animal trap system 300. The display unit 312 is a screen.

Optionally, the monitoring device 310 further comprises another receiving unit 313 and a warning providing unit 314. The other receiving unit 313 is configured for receiving the monitoring signal. The warning providing unit 314 is configured for providing a warning when the monitoring signal exceeds a pre-defined threshold.

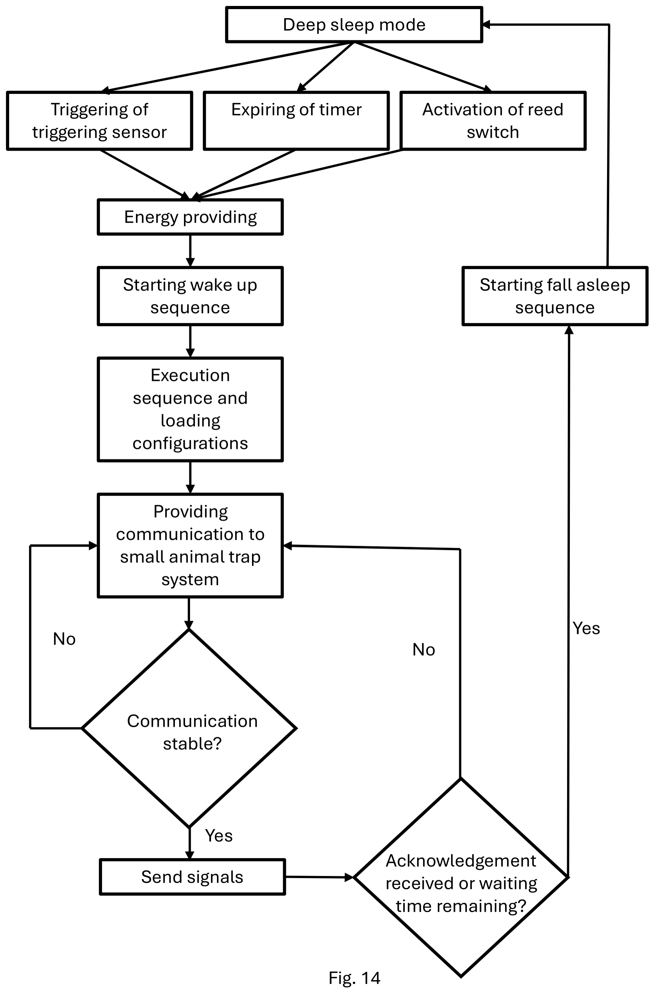

Fig. 14 shows a flow chart for an energy saving mode of the small animal trap. When the trap is operated in an energy saving mode it is a deep sleep mode. In a first state, the complete small animal trap 100, i.e. all components are s in a deep sleep mode, in which all electronic components respectively units, i.e. the first identification device 131, the second identification device 132, the control unit 150, the first triggering sensor 171, the second triggering sensor 172, the indicator 189, the communication unit 173, and the at least one monitoring sensor 151, the energy management unit 174 are turned off or are not provided with power/energy by the energy source 170. When one of the first or second triggering sensors 171 and 172 identifies that one of the traps 111 and 112 has been triggered, when a timer has expired, or when the user has provided a magnet field to the reed switch 152 or to a hall sensor, the energy source 170 provides energy to the control unit 150, to the first identification device 131, to the second identification device 132, to the indicator 180, to the communication unit 173, and to the at least one monitoring sensor 151. Alternatively, when one of the first or second triggering sensors 171 and 172 identifies that one of the traps 111 and 112 has been triggered, when a timer has expired, or when the user has provided a magnet field to the hall sensor , the energy source 170 provides energy only to the control unit 150. When the control unit 150 receives energy, the control unit 150 executes a wake-up sequence for waking up the small animal trap 100. The activation of the hall sensor and the triggering of at least one triggering sensor 171 and 172 causes the energy source 170, in particular the energy management unit 174 to provide energy by e.g. closing a circuit. The timer may provide a periodically waking up of the small animal trap 100 respectively control unit 150, by periodically providing as much energy to the control unit 150 as is needed to wake up the control unit 150 to execute a wake-up sequence, in order to periodically check the trap status and/or providing the trap status signal to the small animal trap monitoring device 300. When the hall sensor is activated by providing a magnet field a mode will change after a predetermined time period, , e.g. more than 5 seconds. Additionally or alternatively, the hall sensor may be deactivated by providing a magnet field for more than 5 seconds. In the wake-up sequence, the control unit 150 may forward energy to the first identification device 131, to the second identification device 132, to the indicator 180, to the communication unit 173, and to the at least one monitoring sensor 151. After the control unit 150 has executed the wake-up sequence, the control unit 150 executes an execution sequence. In the executions sequence, the configurations are loaded from a flash memory. The configurations may be DevEUI, AppEUI or AppKey but is not limited thereto. Additionally, in the execution sequence and e.g. after the loading of the configurations, the control unit 150 tries by or via communication device 173 to establish a connection with at least one small animal trap monitoring device 310. When the control unit 150 is not able to provide a connection to the at least one small animal trap monitoring device 310 and/or when the connection between the control unit 150 and the at least one small animal trap monitoring device 310 is not stable, the control unit 150 keep trying until communication is available respectively stable. When a connection between the control unit 150 and the at least one small animal trap monitoring device 310 is provided, the control unit 150 sends via or by communication device 173 the trap status signal and the monitoring signal to the small animal trap monitoring device 310 and waits for an acknowledgement of the small animal trap monitoring device 310, wherein the acknowledgement indicates that the small animal trap monitoring device 310 has received the transmitted/sent trap status signal and monitoring signal. In case, the control unit 150 does not receive an acknowledgement or a pre-set/predefined waiting time has expired, the control unit 150 tries again by or via the communication device 173 to establish a connection with at least one small animal trap monitoring device 310 and/or sent again the trap status signal and monitoring signal to the small animal trap monitoring device 310. This is executed by the control unit 150 in a predefined interval or period, e.g. 1, 5, 15 and 60 minutes, wherein then it is set into a regular 12h interval until the control unit 150 has received the acknowledgement. When the control unit 150 has received the acknowledgement and therefore the control unit 150 has executed the execution sequence, the control unit 150 executes a fall asleep sequence. In the fall asleep sequence, the control unit 150 stops the communication to at least one small animal trap monitoring unit 310 and turns off the first identification device 131, the second identification device 132, the indicator 180, the communication device 173, and/or the at least one monitoring sensor 151 of the small animal trap 100 after a sleep timer has expired. After turning off all units the energy source does not further provide energy/power to all components and units such that the small animal trap 100 is back in the deep sleep mode.

| | | | |
|---|---|---|---|
| **Reference signs** | | 120c | trap housing base |
| 100 | small animal trap | 120d | trap housing side wall |
| 111 | first trap | 121 | cover |
| 112 | second trap | 121a | first opening |
| 113 | small animal neutralization device | 121b | second opening |
| 1131 | clamp | 122 | base plate |
| 1132 | spring | 122a | space |
| 114 | triggering device | 123 | cover attaching component |
| 115 | trap attaching component | 124 | cover attaching cavity |
| 120 | trap housing | 125 | horizontally extending portion |
| 120a | end portion | 130 | identification device |
| 120b | middle portion | 131 | first identification device |
| 132 | second identification device | 173 | communication device |
| 140 | energy source compartment | 174 | energy management unit |
| 141 | opening | 180 | indicator |
| 142 | compartment cover | 190 | antenna |
| 143 | sealing element | 200 | external unit |
| 144 | energy source securing element | 300 | small animal trap system |
| 145 | screws | 310 | monitoring device |
| 146 | mounting holes | 311 | receiving unit |
| 147 | sealing element holding cavity | 312 | display unit |
| 148 | triggering sensor holding element | 313 | receiving unit |
| 149 | energy source holder | 314 | warning providing unit |
| 150 | control unit | H1 | height of trap housing |
| 151 | monitoring sensor | H2 | height of cover |
| 152 | reed switch | H3 | height of energy source compartment |
| 153 | magnet | H4 | height of the clamp |
| 160 | printed circuit board | L1 | length of the small animal trap |
| 161 | opening or cutout | W1 | width of the trap housing |
| 170 | energy source | W2 | width of the trap housing base |
| 171 | first triggering sensor | | |
| 172 | second triggering sensor | | |

## Claims

1. A small animal trap (100) comprising:
at least one trap (111);
a trap housing (120), the at least one trap (111) is arranged on the trap housing (120),
at least one identification device (130) for providing a small animal identification signal based on an identification parameter;
an energy source compartment (140),
a control unit (150) configured to process the small animal identification signal and to determine whether the at least one trap (111) has caught a small animal, and to provide a trap status signal based on the determination;
a base plate (122) attached to a lower side of the trap housing (120);
wherein the control unit (150) and/or the at least one identification device (130) are provided in space (122a) between the lower side of the trap housing (120) and the baseplate (122).

2. The small animal trap of claim 1, further comprising a first trap and a second trap (111, 112) arranged on opposing end portions of the trap housing (120); wherein the energy source compartment is arranged in a middle portion of the trap housing (120) between the first and second traps (111, 112).

3. The small animal trap (100) of claim 1 or 2, further comprising at least one energy source (170) for providing energy to the at least one identification device (130) and the control unit (150), the at least one energy source (170) is arranged within the energy source compartment (140), preferably the at least one energy source (170) is an exchangeable and/or rechargeable energy source.

4. The small animal trap (100) of claim 1, 2 or 3, further comprising a printed circuit board, PCB, (160) being arranged between the base plate (122) and the trap housing (120), wherein the control unit (150) and the at least one identification device (130) are provided on the PCB (160) and/or the at least one energy source (170) is also provided on the PCB (160).

5. The small animal trap (100) of claim 1, 2, 3 or 4, further comprising at least one triggering sensor (171) for identifying a triggering status of the at least one trap (111) and for providing a trap triggering signal, wherein the control unit (150) is configured for receiving at least one of the trap triggering signal and/or at least one small animal identification signal for determining whether the at least one trap (111, 112) has triggered or whether a small animal has been detected.

6. The small animal trap (100) according to any one of the preceding claims, wherein the at least one or a first and second triggering sensor (171, 172) are attached to the trap housing (120) and/or to the energy source compartment (140).

7. The small animal trap (100) according to any one of the preceding claims, wherein the at least one identification device (130) is a capacitive sensor for measuring a capacitive change in the small animal trap (100) due to an existence of a small animal.

8. The small animal trap (100) according to any one of the preceding claims, wherein the energy source compartment (140) has an opening (141) at its upper side, wherein a compartment cover (142) is configured to removably close the opening (141) of the energy source compartment (140), and a sealing element (143) is provided between the compartment cover (142) and the energy source compartment (140) for isolating the energy source compartment (140),
preferably the compartment cover (142) comprises at least one energy source securing element (144) configured for securing the at least one energy source (170), preferably the energy source securing element (144) is formed as rip or protrusion for holding down the energy source (170) inside the energy source compartment (140).

9. The small animal trap (100) according to any one of the preceding claims, wherein the small animal trap (100) comprises a cover (121) attached to the trap housing (120) and forming a first opening (121a) and a second opening (121b) at opposing ends of the trap housing (120).

10. The small animal trap (100) according to any one of the preceding claims, wherein the base plate (122) is made at least partly of a semitransparent, light guiding or transparent material and/or a sealing material is provided between the base plate (122) and the trap housing (120) and/or the base plate (122) fully or at least partially horizontally exceeds the trap housing (120).

11. The small animal trap (100) according to any one of the preceding claims, wherein the at least one identification device (130) is electrically connected to the control unit (150), and/or wherein the at least of one identification device (130) comprises a first identification device (131) and a second identification device (132), wherein the first identification device (131) is associated to the first trap (111) and a second identification device (132) is associated to the second trap (112).

12. The small animal trap (100) according to any one of the preceding claims, further comprising:
at least one indicator (180) configured for displaying the trap status signal determined by the control unit (150),
wherein the at least one indicator (180) is a light emitting device, LED, facing the base plate (122), and/or the at least one indicator (180) is electrically coupled to the control unit (150).

13. The small animal trap (100) according to any one of the preceding claims, further comprising at least one monitoring sensor (151), the at least one monitoring sensor (151) is electrically coupled to the control unit (150); and/or is configured for measuring at least one parameter in the small animal trap (100), preferably temperature and/or humidity of the energy source compartment (140), and for providing a monitoring signal based on the at least one parameter.

14. The small animal trap (100) according to any one of the preceding claims, further comprising at least one of:
a communication device (173) for providing the trap status signal and/or the monitoring signal to an external unit (200).
a reed switch (152) and/or hall sensor, wherein the reed switch (152) and/or hall sensor is configured for activating or deactivating or mode switching of the control unit (150).

15. A small animal trap system (300) comprising:
at least one small animal trap (100) according to any one of the preceding claims;
a monitoring device (310) communicatively coupled to at least one small animal trap (100) and configured to receive one or more trap status signals; wherein the monitoring device (310) includes:
a receiving unit (311) for receiving the trap status signal from the communication device (173), and/or
a display unit (312) for providing and/or displaying the received trap status signal to at least one user of the small animal trap system (300).
